# EUROPÄISCHE PATENTSCHRIFT

(11) **EP 3 292 030 B1**
(45) Veröffentlichungstag und Bekanntmachung des Hinweises auf die Patenterteilung: **10.07.2019**
(21) Anmeldenummer: 16721362.8
(22) Anmeldetag: 06.05.2016
(51) Int. Cl.: B60T 13/66, B60T 13/68, B60T 7/04

(54) **VORRICHTUNG ZUM STEUERN EINER BREMSANLAGE FÜR EIN NUTZFAHRZEUG UND BREMSANLAGE**
DEVICE FOR CONTROLLING A BRAKING SYSTEM FOR A UTILITY VEHICLE AND BRAKING SYSTEM
DISPOSITIF DE COMMANDE D'UN SYSTÈME DE FREINAGE POUR UN VÉHICULE UTILITAIRE ET SYSTÈME DE FREINAGE

(30) Priorität: 07.05.2015 DE 102015107125
(43) Veröffentlichungstag der Anmeldung: 14.03.2018
(73) Patentinhaber: KNORR-BREMSE Systeme für Nutzfahrzeuge GmbH, 80809 München (DE)
(72) Erfinder: SCHNITTGER, Karsten, 80935 München (DE); GRIESSER, Fabian, 80803 München (DE); HERGES, Michael, 80935 München (DE)
(86) Internationale Anmeldenummer: PCT/EP2016/000748
(87) Internationale Veröffentlichungsnummer: WO 2016/177475

(56) Entgegenhaltungen:
- EP-A1- 1 504 975
- EP-A1- 1 780 087
- EP-A2- 1 366 964
- EP-A2- 2 570 318
- WO-A1-2013/093545
- DE-A1- 10 310 235
- DE-A1- 19 609 222
- DE-A1-102006 036 748
- DE-A1-102007 008 504
- DE-A1-102008 009 882
- DE-A1-102013 107 503

## Beschreibung

Die vorliegende Erfindung bezieht sich auf eine Vorrichtung zum Steuern einer Bremsanlage für ein Nutzfahrzeug und auf eine Bremsanlage.

Eine Bremsanlage eines Nutzfahrzeugs umfasst eine elektronische Parkbremse (EPB) und ein Anhängersteuermodul (TCM).

Die DE 196 09 222 A1 offenbart ein Anhängersteuerventil für eine Druckluftbremsanlage für Kraftfahrzeuge, welches durch einen elektrischen Steuerkreis und einen pneumatischen Steuerkreis einer Betriebsbremsanlage sowie durch einen pneumatischen Steuerkreis einer Feststellbremsanlage ansteuerbar ist.

Es ist die Aufgabe der vorliegenden Erfindung eine verbesserte Vorrichtung zum Steuern einer Bremsanlage für ein Nutzfahrzeug und eine verbesserte Bremsanlage zu schaffen.

Diese Aufgabe wird durch eine Vorrichtung zum Steuern einer Bremsanlage für ein Nutzfahrzeug und eine Bremsanlage gemäß den Hauptansprüchen gelöst.

Der beschriebene Ansatz basiert auf einer Integration der Funktionseinheiten der elektronischen Parkbremse und des Anhängersteuermoduls. Dabei wird eine Doppelnutzung eines Parkbremskolbens eines Anhängersteuerventils umgesetzt. Dies ermöglicht die Bereitstellung einer Funktion des elektrischen Bremsens als die Bereitstellung einer Parkbremsfunktion über den Parkbremskolben.

Im Folgenden werden zunächst die grundsätzlichen Funktionen der elektronischen Parkbremse (EPB) und des Anhängersteuermoduls (TCM) beschrieben.

Ein von einer HCU (Hand-Control Unit) elektronisch erfasster und als elektronisches Signal übermittelter Fahrerwunsch oder automatisch generierter Soll-Betriebszustand der Parkbremse ist umzusetzen. Im EPB-Modul wird der Soll-Betriebszustand mit der elektronischen Steuereinheit unter Nutzung von Magnetventilen, Drucksensoren und pneumatischen Ventilen dazu genutzt die Parkbremsaktuatoren (Federspeicherbremszylinder) pneumatisch zu betätigen oder zu lösen. In der Parkstellung ist der Federspeicher entlüftet und in der Fahrstellung ist der Federspeicher mit Druckluft beaufschlagt. Sowohl die Parkstellung als auch die Fahrstellung müssen auch bei Stromausfall stabil bleiben. Die Federspeicher können auch gestuft mit Druckluft beaufschlagt werden, um z.B. eine Hilfsbremswirkung zu erzielen, insbesondere im Falle eines Ausfalls der Betriebsbremse. Das Anhängersteuermodul kann von der elektronischen Parkbremse angesteuert werden, um gegebenenfalls die Betriebsbremse des Anhängers zu aktivieren. Dabei gibt es zwei Varianten. In der ersten Variante ist der Anhänger in der stabilen Parkstellung gebremst. In der zweiten Variante ist der Anhänger in der stabilen Parkstellung ungebremst.

Das Anhängersteuermodul ist ein Modul eines EBS (elektronischen Bremssystems). Es setzt Anhänger-Solldruck-Vorgaben eines EBS-Systems und einer Parkbremse in den pneumatischen Steuerdruck zum Abbremsen des Anhängers um und gibt ihn über die gelbe Bremsleitung zum Anhänger aus (nachfolgend "Druck zum Anhänger" genannt). Im normalen Fahrbetrieb regelt ein elektronisches Steuergerät (z.B. EBS-ECU) den Druck zum Anhänger mittels Drucksensor, Magnetventilen und Relaisteil. Für den Fall eines Fehlers in der elektrischen Druckregelung (Back Up) wird der Druck zum Anhänger mit rein pneumatischen Mitteln aus dem pneumatischen Backupdruck vom Fußbremsventil gesteuert, der im Normalfall (bei elektronischer Druckregelung) zurückgehalten wird, z.B. mit einem Backup-Magnetventil. Auch die Parkbremse (z.B. eine EPB) gibt dem TCM ein Steuersignal für den Druck zum Anhänger vor, jedoch invertiert. Im Falle eines Abrisses der pneumatischen Bremsleitung zum Anhänger entlüftet das Anhängersteuermodul bei einer Vollbremsung die (rote) Vorratsleitung zum Anhänger, worauf dieser automatisch einbremst.

Die Funktionen der elektronischen Parkbremse (EPB) und des Anhängersteuermoduls (TCM) können in eine Vorrichtung zum Steuern einer Bremsanlage für ein Nutzfahrzeug integriert werden.

Eine solche Vorrichtung zum Steuern einer Bremsanlage für ein Nutzfahrzeug weist die folgenden Merkmale auf:
einen Versorgungsanschluss zum Bereitstellen von Druckluft, einen Betriebsbremsanschluss zum Koppeln der Vorrichtung mit einem Kupplungskopf für eine Anhänger-Bremsleitung eines Anhängers des Nutzfahrzeugs, einen Vorratsanschluss zum Koppeln der Vorrichtung mit einem Kupplungskopf für eine Anhängerversorgung des Anhängers und einen Parkbremsanschluss zum Koppeln der Vorrichtung mit einer Parkbremse des Nutzfahrzeugs;
ein Parkbremssteuerventil zum Bereitstellen einer Parkbremsfunktion für das Nutzfahrzeug, wobei das Parkbremssteuerventil einen ersten Parkbremssteuerventilanschluss, einen zweiten Parkbremssteuerventilanschluss und einen dritten Parkbremssteuerventilanschluss aufweist, wobei der erste Parkbremssteuerventilanschluss mit dem Versorgungsanschluss und der zweite Parkbremssteuerventilanschluss mit dem Parkbremsanschluss verbunden sind;
ein Anhängersteuerventil zum Bereitstellen einer Feststellbremsfunktion und einer Funktion des elektrischen Bremsens für den Anhänger, wobei das Anhängersteuerventil einen ersten Anhängersteuerventilanschluss, einen zweiten Anhängersteuerventilanschluss, einen dritten Anhängersteuerventilanschluss und einen vierten Anhängersteuerventilanschluss aufweist, wobei der erste Anhängersteuerventilanschluss mit dem Versorgungsanschluss, der zweite Anhängersteuerventilanschluss mit dem Betriebsbremsanschluss und der dritte Anhängersteuerventilanschluss mit dem Vorratsanschluss verbunden ist, und wobei das Anhängersteuerventil einen Parkbremskolben aufweist, der verschiebbar angeordnet ist, um abhängig von einem Belüftungszustand des vierten Anhängersteuerventilanschluss eine Belüftung des zweiten Anhängersteuerventilanschlusses über den ersten Anhängersteuerventilanschluss zum Bereitstellen der Feststellbremsfunktion und der Funktion des elektrischen Bremsens zu steuern; und
eine schaltbare Ventileinrichtung zum schaltbaren Verbinden des Versorgungsanschluss mit dem dem dritten Parkbremssteuerventilanschluss und/oder dem vierten Anhängersteuerventilanschluss, um das Bereitstellen der Parkbremsfunktion für das Nutzfahrzeug sowie das Bereitstellen der Feststellbremsfunktion und der Funktion des elektrischen Bremsens für den Anhänger zu bewirken.

Das Parkbremssteuerventil kann der Funktionseinheit der elektronischen Parkbremse (EPB) und das Anhängersteuerventil kann der Funktionseinheit des Anhängersteuermoduls (TCM) zugeordnet werden. Die Parkbremsfunktion kann zum Feststellen und Lösen der Parkbremse des Nutzfahrzeugs verwendet werden. Die Feststellbremsfunktion kann entsprechend zu der Parkbremsfunktion zum Feststellen und Lösen einer Bremse des Anhängers verwendet werden. Die Funktion des elektrischen Bremsens kann zum Aktivieren und Lösen einer Bremse des Anhängers verwendet werden, beispielsweise gesteuert von einem elektronischen Steuergerät zum Regeln einer Antiblockierfunktion (ABS-Steuergerät). Die Ventileinrichtung kann zumindest einen Steuereingang zum Empfangen zumindest eines elektronischen Steuersignals umfassen. Die Ventileinrichtung kann sowohl zum Generieren eines Steuerdrucks zum Steuern des Parkbremssteuerventils als auch zum Generieren eines Steuerdrucks zum Steuern des Anhängersteuerventils verwendet werden. Somit kann die Ventileinrichtung den beiden Funktionseinheiten EPB und TCM zugeordnet werden. Die Ventileinrichtung kann beispielsweise zwei 2/2-Wege-Magentventile umfassen, über die ein über den Versorgungsanschluss bereitgestellter Druck als Steuerdruck an einen Steueranschluss des Parkbremssteuerventils und des Anhängersteuerventils weitergeleitet werden kann. Aufgrund einer Doppelfunktion des Parkbremskolbens des Anhängersteuerventils kann der vierte Anhängersteuerventilanschluss des Anhängersteuerventils als einziger Steueranschluss des Anhängersteuerventils vorgesehen sein, der unter Verwendung des von dem Versorgungsanschluss bereitgestellten Drucks angesteuert wird.

Gemäß einer Ausführungsform kann die Ventileinrichtung ausgebildet sein, um in einer ersten Ventilstellung den Versorgungsanschluss von dem dritten Parkbremssteuerventilanschluss und dem vierten Anhängersteuerventilanschluss zu trennen. In einer zweiten Ventilstellung kann die Ventileinrichtung ausgebildet sein, um den Versorgungsanschluss von dem dritten Parkbremssteuerventilanschluss zu trennen und mit dem vierten Anhängersteuerventilanschluss zu verbinden. In einer dritten Ventilstellung kann die Ventileinrichtung ausgebildet sein, um den Versorgungsanschluss mit dem dritten Parkbremssteuerventilanschluss und dem vierten Anhängersteuerventilanschluss zu verbinden. Diese drei Schaltstellungen können ausreichend sein, um unter Verwendung des Parkbremssteuerventils und des Anhängersteuerventils die Parkbremsfunktion des Nutzfahrzeugs sowie die Feststellbremsfunktion und die Funktion des elektrischen Bremsens des Anhängers umzusetzen.

Das Parkbremssteuerventil kann ausgebildet sein, um den zweiten Parkbremssteuerventilanschluss mit dem ersten Parkbremssteuerventilanschluss zu verbinden, wenn der dritte Parkbremssteuerventilanschluss belüftet ist, und ausgebildet sein, um den zweiten Parkbremssteuerventilanschluss von dem ersten Parkbremssteuerventilanschluss zu trennen, wenn der dritte Parkbremssteuerventilanschluss entlüftet ist. Vorteilhafterweise kann dazu ein Parkbremssteuerventil eingesetzt werden, wie es bereits bei bekannten EPB-Modulen eingesetzt wird.

Der Parkbremskolben des Anhängersteuerventils kann verschiebbar angeordnet sein, um ansprechend auf eine Entlüftung des vierten Anhängersteuerventilanschlusses in eine erste Endstellung bewegt zu werden, wodurch der Parkbremskolben von einem Ventilsitz abgehoben wird. Dies kann bewirken, dass der erste Anhängersteuerventilanschluss mit dem zweiten Anhängersteuerventilanschluss fluidisch verbunden wird. Ansprechend auf eine Belüftung des vierten Anhängersteuerventilanschlusses kann der Parkbremskolben in eine zweite Endstellung bewegt werden, wodurch der Parkbremskolben an dem Ventilsitz anliegt. Dies kann bewirken, dass der erste Anhängersteuerventilanschluss von dem zweiten Anhängersteuerventilanschluss getrennt wird. Vorteilhafterweise können die Endstellungen des Parkbremskolbens sowohl zum Umsetzen der Feststellbremsfunktion als auch zum Umsetzen der Funktion des elektrischen Bremsens des Anhängers verwendet werden.

Gemäß einer Ausführungsform umfasst die Vorrichtung einen Steueranschluss zum Koppeln der Vorrichtung mit einem Fußbremsventil. Dazu kann das Anhängersteuerventil einen fünften Anhängersteuerventilanschluss aufweisen, der mit dem Steueranschluss gekoppelt ist. Ferner kann das Anhängersteuerventil einen Kolben aufweisen, der verschiebbar angeordnet ist, um ansprechend auf eine Belüftung des fünften Anhängersteuerventilanschlusses gegen eine Federkraft in Richtung des Ventilsitzes bewegt zu werden und gegen den Ventilsitz zu drücken. Dadurch kann der Ventilsitz verschoben werden, sodass der erste Anhängersteuerventilanschluss mit dem zweiten Anhängersteuerventilanschluss fluidisch verbunden wird. Auf diese Weise kann die Bremse des Anhängers zusätzlich über eine Betätigung eines Fußbremspedals aktiviert werden.

Vorteilhafterweise kann das Anhängersteuerventil neben dem vierten Anhängersteuerventilanschluss und dem fünften Anhängersteuerventilanschluss keinen weiteren Steueranschluss aufweisen. Auf diese Weise kann das Anhängersteuerventil sehr kompakt gebaut sein.

Die Vorrichtung kann ein eine Gehäusewand aufweisendes Gehäuse umfassen. Dabei kann die Gehäusewand das Parkbremssteuerventil, das Anhängersteuerventil und die Ventileinrichtung umschließen und den Betriebsbremsanschluss, den Vorratsanschluss und den Parkbremsanschluss aufweisen. Somit können die Funktionseinheiten EPB und TCM in einem einzigen Gehäuse integriert angeordnet sein.

Gemäß einer Ausführungsform kann die Ventileinrichtung ein erstes 2/2-Wegeventil aufweisen, wobei ein erster Anschluss des ersten 2/2-Wegeventils mit dem Versorgungsanschluss und ein zweiter Anschluss des ersten 2/2-Wegeventils mit dem vierten Anhängersteuerventilanschluss verbunden ist, ein zweites 2/2-Wegeventil aufweisen, wobei ein erster Anschluss des zweiten 2/2-Wegeventils mit dem vierten Anhängersteuerventilanschluss und ein zweiter Anschluss des zweiten 2/2-Wegeventils mit einer Entlüftung verbunden ist, und ein drittes 2/2-Wegeventil aufweisen, wobei ein erster Anschluss des dritten 2/2-Wegeventils mit dem vierten Anhängersteuerventilanschluss und ein zweiter Anschluss des dritten 2/2-Wegeventils mit dem dritten Parkbremssteuerventilanschluss verbunden ist. Auf diese Weise können drei 2/2-Wegeventile, die beispielsweise als Magnetventile realisiert sein können, ausreichend sein, um die erforderlichen Funktionen der Ventileinrichtung umzusetzen. Anstelle eines 2/2-Wegeventils können andere Ventilformen eingesetzt werden, durch die die Funktion eines 2/2-Wegeventils nachgebildet werden kann.

Vorteilhafterweise können die 2/2-Wegeventile ansteuerbar sein, um das Bereitstellen der Parkbremsfunktion durch das Parkbremssteuerventil sowie das Bereitstellen der Feststellbremsfunktion, der Funktion des elektrischen Bremsens durch das Anhängersteuerventil zu bewirken. Somit können die drei 2/2-Wegeventile ausreichend sein, um die genannten Funktionen umzusetzen. Auf diese Weise kann die Ventileinrichtung mit sehr wenigen 2/2-Wegeventilen umgesetzt werden.

Gemäß einer Ausführungsform kann die Ventileinrichtung ein viertes 2/2-Wegeventil aufweisen, wobei ein erster Anschluss des vierten 2/2-Wegeventils mit dem zweiten Parkbremssteuerventilanschluss und ein zweiter Anschluss des vierten 2/2-Wegeventils mit dem dritten Parkbremssteuerventilanschluss verbunden ist. Dies ermöglicht eine Rücckopplung zwischen dem zweiten und dem dritten Parkbremssteuerventilanschluss.

Eine Bremsanlage für ein Nutzfahrzeug weist die folgenden Merkmale auf:
eine genannte Vorrichtung zum Steuern einer Bremsanlage für ein Nutzfahrzeug;
eine Druckluftversorgung, die über den Versorgungsanschluss mit der Vorrichtung verbunden ist, einen Kupplungskopf für eine Anhänger-Bremsleitung, der über den Betriebsbremsanschluss mit der Vorrichtung verbunden ist, einen Kupplungskopf für eine Anhängerversorgung, der über den Vorratsanschluss mit der Vorrichtung verbunden ist und eine Parkbremse, die über den Parkbremsanschluss mit der Vorrichtung verbunden ist; und
eine elektronische Steuereinrichtung, die ausgebildet ist, um zumindest ein Steuersignal an zumindest einen Steuereingang der Ventileinrichtung bereitzustellen.

Die elektronische Steuereinrichtung kann ausgebildet sein, um das Bereitstellen der Parkbremsfunktion durch das Parkbremssteuerventil sowie das Bereitstellen der Feststellbremsfunktion und der Funktion des elektrischen Bremsens durch das Anhängersteuerventil durch Ausgabe eines oder mehrere Steuersignale an den zumindest einen Steuereingang der Ventileinrichtung zu bewirken.

Bevorzugte Ausführungsbeispiele der vorliegenden Erfindung werden nachfolgend Bezug nehmend auf die beiliegenden Zeichnungen näher erläutert. Es zeigen:
- Fig. 1: eine schematische Darstellung einer Bremsanlage für ein Nutzfahrzeug;
- Fig. 2: eine Darstellung einer Vorrichtung zum Steuern einer Bremsanlage;
- Fig. 3: eine Darstellung einer Vorrichtung zum Steuern einer Bremsanlage;
- Fig. 4: eine Darstellung einer Vorrichtung zum Steuern einer Bremsanlage; und
- Fig. 5: eine Darstellung einer Vorrichtung zum Steuern einer Bremsanlage.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

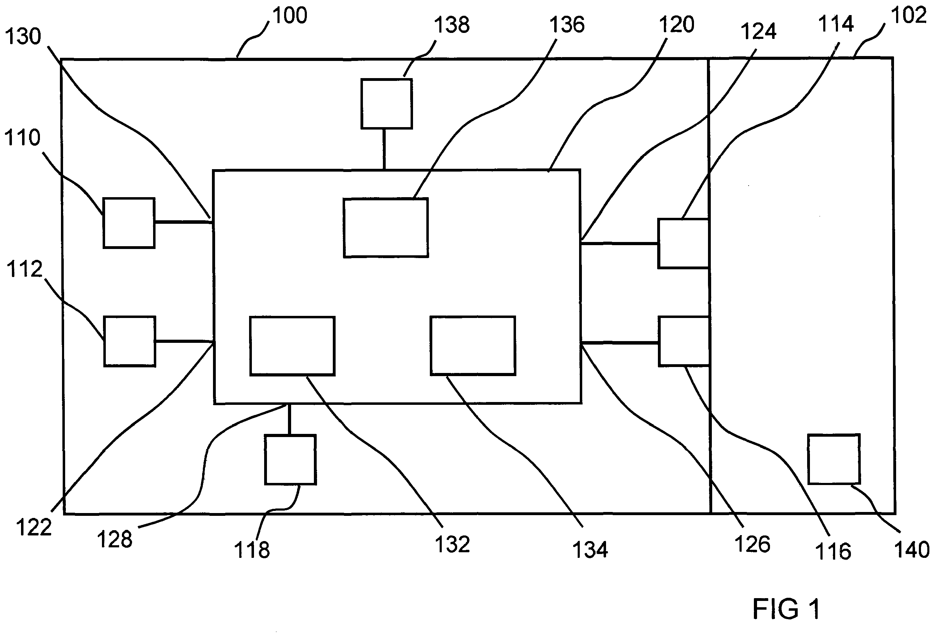

Fig. 1 zeigt eine schematische Darstellung einer Bremsanlage für ein Nutzfahrzeug 100 mit einem Anhänger 102 gemäß einem Ausführungsbeispiel der vorliegenden Erfindung. Die Bremsanlage umfasst ein Fußbremsventil 110, eine Druckluftversorgung 112, einen Kupplungskopf 114 für eine Anhänger-Bremsleitung, einen Kupplungskopf 116 für eine Anhängerversorgung, eine Parkbremse 118 für das Nutzfahrzeug 100 sowie eine Vorrichtung 120 zum Steuern der Bremsanlage.

Die Vorrichtung 120 weist einen Versorgungsanschluss 122, einen Betriebsbremsanschluss 124, einen Vorratsanschluss 126, einen Parkbremsanschluss 128 und einen Steueranschluss 130 auf. Die Druckluftversorgung 112 ist über den Versorgungsanschluss 122, der Kupplungskopf 114 über den Betriebsbremsanschluss 124, der Kupplungskopf 116 über den Vorratsanschluss 126, die Parkbremse 118 über den Parkbremsanschluss 128 und das Fußbremsventil 110 ist über den Steueranschluss 130 mit der Vorrichtung 120 gekoppelt, beispielsweise über pneumatische Leitungen.

Die Vorrichtung 120 weist ein Parkbremssteuerventil 132, ein Anhängersteuerventil 134 und eine schaltbare Ventileinrichtung 136 auf. Die Vorrichtung 120 umfasst die Funktionseinheiten einer elektrischen Parkbremse sowie eines Anhängersteuermoduls. Insbesondere ist die Vorrichtung 120 ausgebildet, um eine Parkbremsfunktion für das Nutzfahrzeug 100 sowie eine Feststellbremsfunktion und eine Funktion des elektrischen Bremsens für den Anhänger 102 bereitzustellen. Dazu weist die Bremsanlage eine elektronische Steuereinrichtung 138 auf, die ausgebildet ist, um zumindest ein Steuersignal an zumindest einen Steuereingang der Ventileinrichtung 136 bereitzustellen. Die elektronische Steuereinrichtung 138 kann auch in die Vorrichtung 120 integriert sein. Die Ventileinrichtung 136 ist ausgebildet, um gesteuert über das zumindest eine Steuersignal den Versorgungsanschluss 122 mit einem Steueranschluss des Parkbremssteuerventils 132 und/oder einem Steueranschluss des Anhängersteuerventils 134 zu verbinden oder den Versorgungsanschluss 122 von dem Steueranschluss des Parkbremssteuerventils 132 und/oder dem Steueranschluss des Anhängersteuerventils 134 zu trennen. Abhängig von einer durch das zumindest eine Steuersignal bewirkten Schaltstellung der Ventileinrichtung 136 ist das Parkbremssteuerventil 132 ausgebildet, um die Parkbremsfunktion bereitzustellen, durch die die Parkbremse 118 aktiviert wird. Entsprechend ist das Anhängersteuerventil 134 abhängig von einer durch das zumindest eine Steuersignal bewirkten Schaltstellung der Ventileinrichtung 136 ausgebildet, um die Feststellbremsfunktion oder die Funktion des elektrischen Bremsens bereitzustellen, durch die eine Bremse 140 des Anhängers 102 aktiviert werden kann.

Das Anhängersteuerventil 134 weist einen Parkbremskolben auf, der abhängig von einem Belüftungszustand eines Steueranschlusses des Anhängersteuerventils 134 zwischen einer ersten Stellung und einer zweiten Stellung bewegt werden kann. Abhängig von der Stellung des Parkbremskolbens wird der Versorgungsanschluss 122 mit dem Betriebsbremsanschluss 124 verbunden oder von dem Betriebsbremsanschluss 124 getrennt. Der gemäß einem Ausführungsbeispiel ausschließlich über den einen Steueranschluss des Anhängersteuerventils 134 steuerbaren Parkbremskolben wird sowohl die Feststellbremsfunktion als auch die Funktion des elektrischen Bremsens bereitgestellt.

Gemäß einem Ausführungsbeispiel weist das Anhängersteuerventil 134 nur einen einzigen Steueranschluss auf, der mit über den Versorgungsanschluss 122 bereitgestellter Druckluft angesteuert wird.

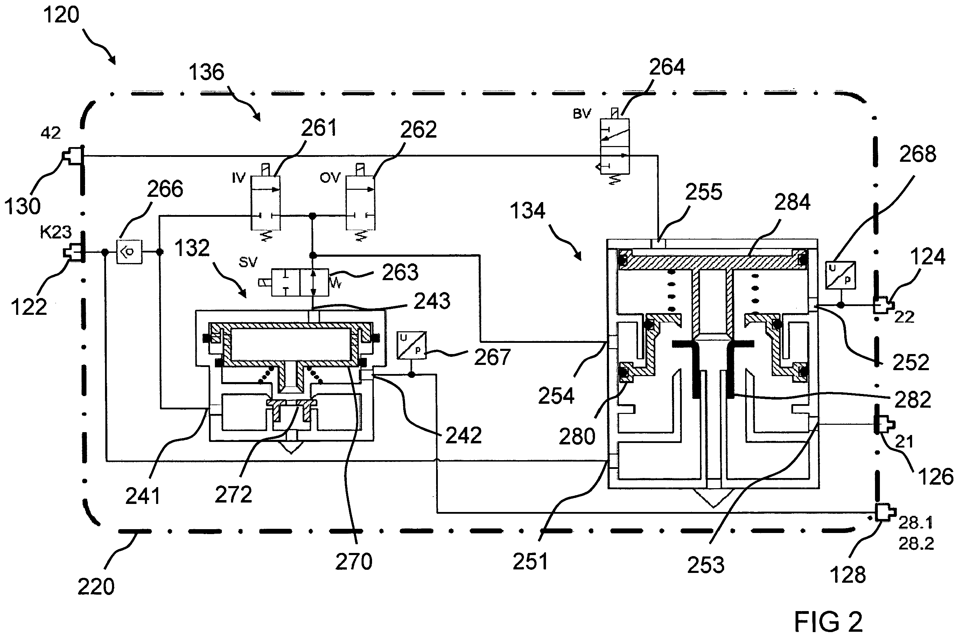

Fig. 2 zeigt eine Vorrichtung 120 zum Steuern der Bremsanlage gemäß einem Ausführungsbeispiel der vorliegenden Erfindung. Beispielsweise kann es sich bei der Vorrichtung 120 um ein Ausführungsbeispiel der anhand von Fig. 1 beschriebenen Vorrichtung handeln.

Die Vorrichtung 120 weist als eingangseitige Anschlüsse den Versorgungsanschluss 122 und den Steueranschluss 130 und als ausgangsseitige Anschlüsse den Betriebsbremsanschluss 124, den Vorratsanschluss 126 und den Parkbremsanschluss 128 auf.

Die Vorrichtung 120 weist ein Parkbremssteuerventil 132, ein Anhängersteuerventil 134 und eine schaltbare Ventileinrichtung 136 auf. Als Funktionseinheiten umfasst die Vorrichtung das Parkbremssteuerventil 132, das Anhängersteuerventil 134 und die Ventileinrichtung 136.

Die Vorrichtung 120 weist gemäß einem Ausführungsbeispiel ein Gehäuse 220 auf, wobei die Anschlüsse 122, 124, 126, 128, 130 in eine das Parkbremssteuerventil 132, das Anhängersteuerventil 134 und die Ventileinrichtung 136 umschließende Gehäusewand des Gehäuses 220 integriert sind.

Das Parkbremssteuerventil 132 weist einen ersten Parkbremssteuerventilanschluss 241, einen zweiten Parkbremssteuerventilanschluss 242 und einen dritten Parkbremssteuerventilanschluss 243 auf.

Das Anhängersteuerventil 134 weist einen ersten Anhängersteuerventilanschluss 251, einen zweiten Anhängersteuerventilanschluss 252, einen dritten Anhängersteuerventilanschluss 253, einen vierten Anhängersteuerventilanschluss 254 und einen fünften Anhängersteuerventilanschluss 255 auf.

Die Ventileinrichtung 136 weist vier 2/2-Wegeventile 261, 262, 263 und gemäß diesem Ausführungsbeispiel ein 3/2-Wegeventil 264 auf. Die Ventile 261, 262, 263, 264 sind als Magnetventile ausgeführt.

Der erste Parkbremssteuerventilanschluss 241 des Parkbremssteuerventils 132 ist über ein Rückschlagventil 266 mit dem Versorgungsanschluss verbunden. Der zweite Parkbremssteuerventilanschluss 242 ist mit dem Parkbremsanschluss 128 verbunden. Eine Druckmesseinrichtung 267 ist mit einer den zweiten Parkbremssteuerventilanschluss 242 und den Parkbremsanschluss 128 verbindenden Leitung gekoppelt, um an dem zweiten Parkbremssteuerventilanschluss 242 herrschenden Druck erfassen zu können. Der dritte Parkbremssteuerventilanschluss 243 ist über ein erstes 2/2-Wegeventil 261 und ein drittes 2/2-Wegeventil 263 der Ventileinrichtung 136 sowie über das Rückschlagventil 266 mit dem Versorgungsanschluss 122 verbunden.

Dabei ist ein erster Anschluss des ersten 2/2-Wegeventils 261 mit dem Rückschlagventil 266 und ein zweiter Anschluss des ersten 2/2-Wegeventils 261 mit einem ersten Anschluss des zweiten 2/2-Wegeventils 262, einem ersten Anschluss des dritten 2/2-Wegeventils 263 sowie mit dem vierten Anhängersteuerventilanschluss 254 verbunden. Ein zweiter Anschluss des zweiten 2/2-Wegeventils 262 ist offen und ein zweiter Anschluss des dritten 2/2-Wegeventils 263 ist mit dem dritten Parkbremssteuerventilanschluss verbunden. Das 3/2-Wegeventil 264 ist zwischen dem Steueranschluss 130 und dem fünften Anhängersteuerventilanschluss 255 geschaltet.

Der Versorgungsanschluss 122 ist mit dem ersten Anhängersteuerventilanschluss 251 verbunden. Der zweite Anhängersteuerventilanschluss 252 ist mit dem Betriebsbremsanschluss 124 verbunden, wobei eine weitere Druckmesseinrichtung 268 mit einer den zweiten Anhängersteuerventilanschluss 252 und den Betriebsbremsanschluss 124 verbindenden Leitung gekoppelt ist, um einen an dem zweiten Anhängersteuerventilanschluss 252 herrschenden Druck erfassen zu können. Der dritte Anhängersteuerventilanschluss 253 ist mit dem Vorratsanschluss 126 verbunden.

Das Parkbremssteuerventil 132 ist ausgebildet, um den zweiten Parkbremssteuerventilanschluss 242 mit dem ersten Parkbremssteuerventilanschluss 241 zu verbinden, wenn der dritte Parkbremssteuerventilanschluss 243 belüftet ist. Wenn der dritte Parkbremssteuerventilanschluss 243 entlüftet ist, ist das Parkbremssteuerventil 132 ausgebildet, um den zweiten Parkbremssteuerventilanschluss 242 von dem ersten Parkbremssteuerventilanschluss 241 zu trennen. Dazu weist das Parkbremssteuerventil 132 gemäß diesem Ausführungsbeispiel einen Kolben 270 auf der zwischen einer ersten und einer zweiten Stellung bewegbar angeordnet ist. Der Kolben 270 wird bei entlüftetem dritten Parkbremssteuerventilanschluss 243 durch eine Feder gegen den dritten Parkbremssteuerventilanschluss 243 gedrückt. In dieser ersten Stellung des Kolbens 270 wird eine Verbindungsöffnung zwischen dem ersten Parkbremssteuerventilanschluss 241 und dem zweiten Parkbremssteuerventilanschluss 242 über einen weiteren Kolben 272 verschlossen. Der weitere Kolben 272 weist eine Durchgangsöffnung auf, über die der zweite Parkbremssteuerventilanschluss 242 mit einer Entlüftungsöffnung des Parkbremssteuerventils 132 verbunden ist, wenn sich der Kolben 270 in der ersten Stellung befindet. Wird der dritte Parkbremssteuerventilanschluss 243 belüftet, so wird der Kolben 270 entgegen der Federkraft der Feder in die zweite Stellung bewegt und drückt dabei gegen den weiteren Kolben 272. Der weitere Kolben 272 wird durch den Druck des Kolbens 270 bewegt und gibt die Verbindungsöffnung zwischen dem ersten Parkbremssteuerventilanschluss 241 und dem zweiten Parkbremssteuerventilanschluss 242 frei, sodass der zweite Parkbremssteuerventilanschluss 242 belüftet wird. In der zweiten Stellung des Kolbens 270 wird die Durchgangsöffnung des weiteren Kolbens 272 durch den Kolben 270 verschlossen.

Das Anhängersteuerventil 134 weist einen Parkbremskolben 280, einen verschiebbaren Ventilsitz 282 und einen weiteren Kolben 284 auf. Wenn der Parkbremskolben 280 an dem verschiebbaren Ventilsitz 282 anliegt, ist eine Verbindung zwischen dem ersten Anhängersteuerventilanschluss 251 und dem zweiten Anhängersteuerventilanschluss 252 getrennt. Wenn der Parkbremskolben 280 nicht an dem verschiebbaren Ventilsitz 282 anliegt, besteht die Verbindung zwischen dem ersten Anhängersteuerventilanschluss 251 und dem zweiten Anhängersteuerventilanschluss 252. Wenn der vierte Anhängersteuerventilanschluss 254 entlüftet wird, wird der Parkbremskolben 280 in eine erste Endstellung bewegt, in der der Parkbremskolben 280 von dem Ventilsitz 282 abgehoben ist. In der ersten Endstellung des Parkbremskolbens 280 wird der Ventilsitz 282 gegen den Kolben 284 gedrückt, wodurch eine Entlüftungsöffnung des Anhängersteuerventils 134 verschlossen wird. Wenn der vierte Anhängersteuerventilanschluss 254 belüftet wird, wird der Parkbremskolben 280 in eine zweite Endstellung bewegt, in der der Parkbremskolben 280 an dem Ventilsitz 282 anliegt. In der zweiten Endstellung des Parkbremskolbens 280 ist der Ventilsitz 282 von dem Kolben 284 entfernt, wodurch die Entlüftungsöffnung des Anhängersteuerventils 134 mit dem zweiten Anhängersteuerventilanschluss 252 verbunden ist, wodurch der zweite Anhängersteuerventilanschluss 252 belüftet entlüftet wird.

Der Kolben 284 des Anhängersteuerventils 134 wird durch eine Feder in Richtung des fünften Anhängersteuerventilanschlusses 255 gedrückt. Wird der fünfte Anhängersteuerventilanschluss 255 belüftet, so wird der Kolben 285 in Richtung des Ventilsitzes 282 verschoben und drückt gegen den Ventilsitz 282. Dadurch wird die Entlüftungsöffnung des Anhängersteuerventils 134 verschlossen und der Ventilsitz 282 von dem Parkbremskolben 280 entfernt, sodass die Verbindung zwischen dem zweiten Anhängersteuerventilanschluss 252 und dem dritten Anhängersteuerventilanschluss 253 hergestellt wird, wenn sich der Parkbremskolben 280 in der ersten Stellung befindet, und bestehen bleibt, wenn sich der Parkbremskolben 280 in der zweiten Stellung befindet.

In dem in Fig. 2 gezeigten Ausführungsbeispiel befindet sich die Ventileinrichtung 136 in einer ersten Ventilstellung, in der der Versorgungsanschluss 122 von dem dritten Parkbremssteuerventilanschluss 243 und dem vierten Anhängersteuerventilanschluss 254 getrennt ist. Dazu ist das erste 2/2-Wegeventil 261 in einer Sperrstellung, das zweite 2/2-Wegeventil 262 in einer Sperrstellung und das dritte 2/2-Wegeventil 263 in eine Durchgangsstellung geschaltet. Das 3/2-Wegeventil 264 ist in eine Durchgangsstellung geschaltet, in der der Steueranschluss 130 mit dem fünften Anhängersteuerventilanschluss 255 verbunden ist.

In der in Fig. 2 gezeigten ersten Ventilstellung der Ventileinrichtung 136 sind der erste Parkbremssteuerventilanschluss 241 und der erste Anhängersteuerventilanschluss 251 belüftet. Der dritte Parkbremssteuerventilanschluss 243 ist entlüftet, sodass der zweite Parkbremssteuerventilanschluss 242 entlüftet ist. Dies bewirkt gemäß diesem Ausführungsbeispiel eine Aktivierung der Parkbremse des Nutzfahrzeugs über den entlüfteten Parkbremsanschluss 128. Der vierte Anhängersteuerventilanschluss 254 ist entlüftet, sodass der zweite Anhängersteuerventilanschluss 252 belüftet ist. Der dritte Anhängersteuerventilanschluss 253 ist unabhängig von der Stellung des Parkbremskolbens 280 belüftet. Dies bewirkt gemäß diesem Ausführungsbeispiel eine Aktivierung der Betriebsbremse des Anhängers des Nutzfahrzeugs über den belüfteten Betriebsbremsanschluss 124 sowie den belüfteten Vorratsanschluss 126.

Für den Trailertest und das elektrische Bremsen trennt das dritte 2/2-Wegeventil 263 die Steuerleitung des Anhängersteuerventils 134 von der Steuerleitung des Parkbremssteuerventils 132 ab. Dazu können die Ventile 261, 262, 263 der Ventileinrichtung 136 beispielsweise von der in Fig. 1 genannten elektronischen Steuereinrichtung entsprechend angesteuert werden.

Die in Fig. 2 gezeigte Vorrichtung 120 ist für Trucks mit einer Parkstrategie vorgesehen, bei der die Bremse des Anhängers aktiviert wird, wenn die Parkbremse des Zugfahrzeugs aktiviert wird.

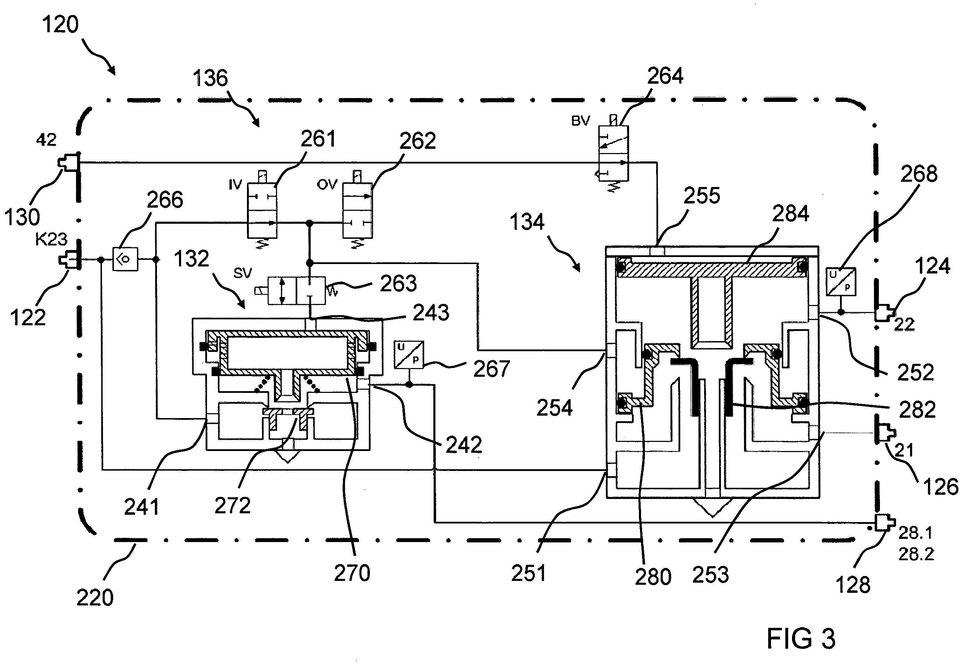

Fig. 3 zeigt eine Vorrichtung 120 zum Steuern der Bremsanlage gemäß einem Ausführungsbeispiel der vorliegenden Erfindung. Beispielsweise kann es sich bei der Vorrichtung 120 um ein Ausführungsbeispiel der anhand von Fig. 1 beschriebenen Vorrichtung handeln.

Die Vorrichtung 120 entspricht der anhand von Fig. 2 beschriebenen Vorrichtung, mit dem Unterschied, dass die Ventileinrichtung 136 in der zweiten Ventilstellung dargestellt ist, in der der Versorgungsanschluss 122 von dem dritten Parkbremssteuerventilanschluss getrennt und mit dem vierten Anhängersteuerventilanschluss 254 verbunden ist.

In der in Fig. 3 gezeigten zweiten Ventilstellung der Ventileinrichtung 136 sind der erste Parkbremssteuerventilanschluss 241 und der erste Anhängersteuerventilanschluss 251 belüftet. Der dritte Parkbremssteuerventilanschluss 243 ist entlüftet, sodass der zweite Parkbremssteuerventilanschluss 242 entlüftet ist. Dies bewirkt gemäß diesem Ausführungsbeispiel eine Aktivierung der Parkbremse des Nutzfahrzeugs über den entlüfteten Parkbremsanschluss 128. Der vierte Anhängersteuerventilanschluss 254 ist belüftet, sodass der zweite Anhängersteuerventilanschluss 252 entlüftet ist. Der dritte Anhängersteuerventilanschluss 253 ist belüftet. Dies bewirkt gemäß diesem Ausführungsbeispiel keine Aktivierung der Betriebsbremse des Anhängers des Nutzfahrzeugs, da der Betriebsbremsanschluss 124 entlüftet ist.

Für das Umschalten des Fahrzustandes und die Graduable-Funktion öffnet das dritte 2/2-Wegeventil 263 die Verbindung zur Steuerleitung des Parkbremssteuerventils 132. Dazu können die Ventile 261, 262, 263 der Ventileinrichtung 136 beispielsweise von der in Fig. 1 genannten elektronischen Steuereinrichtung entsprechend angesteuert werden.

Die in Fig. 3 gezeigte Vorrichtung 120 ist für Trucks mit einer Parkstrategie vorgesehen, bei der eine Aktivierung der Parkbremse des Zugfahrzeugs nicht zu einer Aktivierung der Bremse des Anhängers führt.

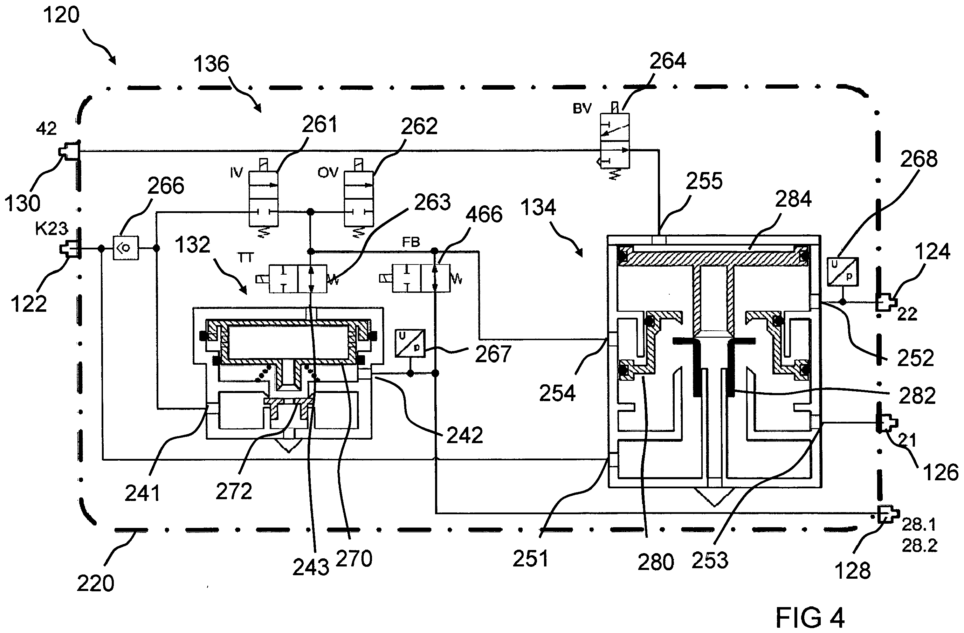

Fig. 4 zeigt eine Vorrichtung 120 zum Steuern der Bremsanlage gemäß einem Ausführungsbeispiel der vorliegenden Erfindung. Beispielsweise kann es sich bei der Vorrichtung 120 um ein Ausführungsbeispiel der anhand von Fig. 1 beschriebenen Vorrichtung handeln.

Die Vorrichtung 120 entspricht der anhand von Fig. 2 beschriebenen Vorrichtung, mit dem Unterschied, dass ein Rückkopplungsventil 466 zwischen den vierten Anhängersteuerventilanschluss 254 und den zweiten Parkbremssteuerventilanschluss 242 geschaltet ist. Das Rückkopplungsventil 466 ist als ein Magnetventil in Form eines 2/2-Wegeventils ausgeführt.

Für den Trailertest und das elektrische Bremsen trennen das dritte 2/2-Wegeventil 263 sowie das Rückkopplungsventil 466 die Steuerleitung des Anhängersteuerventils 134 von der Steuerleitung des Parkbremssteuerventils 132 ab. Dazu können die Ventile 261, 262, 263 der Ventileinrichtung 136 beispielsweise von der in Fig. 1 genannten elektronischen Steuereinrichtung entsprechend angesteuert werden.

Die in Fig. 4 gezeigte Vorrichtung 120 ist für Trucks mit einer Parkstrategie vorgesehen, bei der die Bremse des Anhängers aktiviert wird, wenn die Parkbremse des Zugfahrzeugs aktiviert wird.

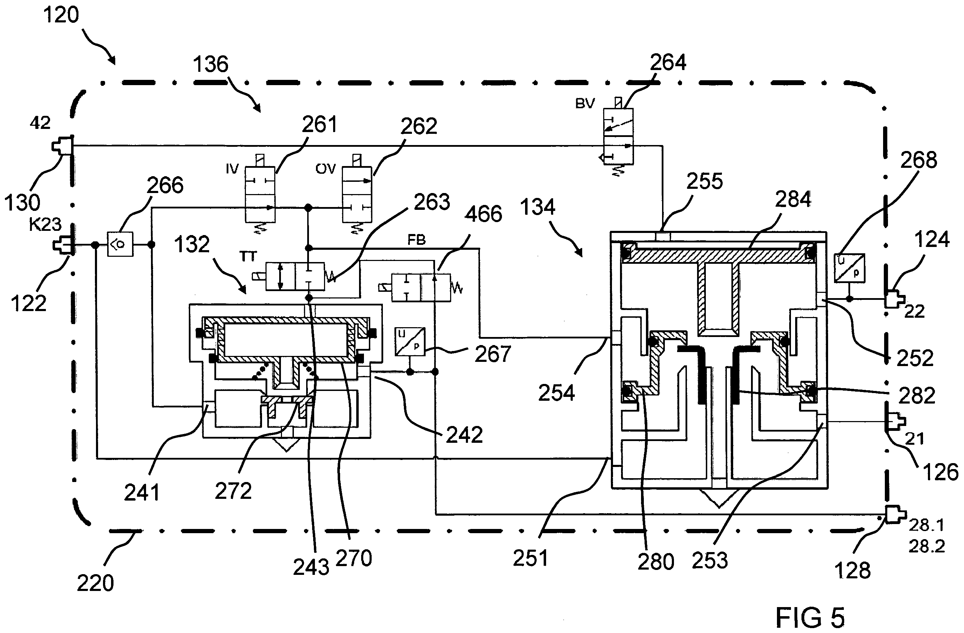

Fig. 5 zeigt eine Vorrichtung 120 zum Steuern der Bremsanlage gemäß einem Ausführungsbeispiel der vorliegenden Erfindung. Beispielsweise kann es sich bei der Vorrichtung 120 um ein Ausführungsbeispiel der anhand von Fig. 1 beschriebenen Vorrichtung handeln.

Die Vorrichtung 120 entspricht der anhand von Fig. 3 beschriebenen Vorrichtung, mit dem Unterschied, dass das Rückkopplungsventil 466, wie anhand von Fig. 5 beschrieben, zwischen den zweiten Parkbremssteuerventilanschluss 242 und den dritten Parkbremsventilanschluss 243 geschaltet ist.

Für das Umschalten des Fahrzustandes und die Graduable-Funktion öffnet das dritte 2/2-Wegeventil 263 die Verbindung zur Steuerleitung des Parkbremssteuerventils 132. Dazu können die Ventile 261, 262, 263 der Ventileinrichtung 136 beispielsweise von der in Fig. 1 genannten elektronischen Steuereinrichtung entsprechend angesteuert werden.

Die in Fig. 5 gezeigte Vorrichtung 120 ist für Trucks mit einer Parkstrategie vorgesehen, bei dem eine Aktvierung der Parkbremse des Zugfahrzeugs nicht zu einer Aktivierung der Bremse des Anhängers führt.

Für diesen Anwendungsfall ist das Rückkopplungsventil 466 nicht zur sicheren Entlüftung von Leckagen notwendig. Durch das Weglassen des Rückkopplungsventils 466 ergibt sich für den Anwendungsfall des Volvotrucks gemäß einem Ausführungsbeispiel das in Fig. 3 gezeigte Schema.

Im Folgenden wird der hier beschriebene Ansatz, der auf einer Doppelnutzung des Parkbremskolbens 280 basiert, anhand der vorangegangenen Figuren näher beschrieben.

Durch eine Systemintegration der Funktionseinheiten EPB und TCM ergeben sich Synergien. Dies ergibt sich durch eine gemeinsame Steuerdruckgenerierung für das der Funktionseinheit EPB zugeordnete Parkbremssteuerventil 132 sowie dem der Funktionseinheit TCM zugeordneten Anhängersteuerventil 134 sowie einer doppelten Nutzung des Parkbremskolbens 280 in dem Anhängersteuerventil 134 für die Parkbremsfunktion und die Funktion des elektrischen Bremsens. Die gemeinsame Steuerdruckgenerierung für EPB und TCM erfolgt beispielsweise mit zwei 2/2 Magnetventilen 261, 263.

Durch die Funktionseinheit EPB wird dabei der Steuerdruck für das Parkbremssteuerventil 132 (PBRV) sowie der Steuerdruck für die TCM-Parkbremsfunktion generiert. Durch die Funktionseinheit TCM wird der Steuerdruck für die Funktion des elektrischen Bremsens generiert.

Ein Kolben, nämlich der Parkbremskolben 280 im TCM ist mit einer Doppelnutzung ausgeführt. Zum einen als Parkbremskolben 280 für die Parkfunktion des TCM und zum anderen als Parkbremskolben 280 für das elektrische Bremsen des TCM.

Durch eine Doppelfunktion der Magnetventile 261, 263 kann die Gesamtanzahl von Magnetventilen 261, 262, 263, 264 gering gehalten werden. Im TCM-Modul sind durch die doppelte Nutzung des Parkbremskolbens 280 für Parkbremsfunktion und elektrisches Bremsen wenige Kolben erforderlich.

Weitere Vorteile ergeben sich durch eine mögliche Integration. Dabei bietet eine gemeinsame Elektronikeinheit Kostenersparnis gegenüber zwei Elektronikeinheiten. Durch eine Integration von EPB und TCM werden gemäß einem Ausführungsbeispiel Drucksensoren 267, 268 in dem EPB-Teil und im TCM-Teil genutzt, um sich gegenseitig die korrekte Sensor-Funktion zu plausibilisieren. TCM Bauteile können einfach gestaltet werden. Zudem kann die TCM-Funktionalität platzsparend realisiert werden. Ferner ist eine Integration von EPB-Gehäuse und TCM-Gehäuse realisierbar. Dadurch entfallen Leitungen und Fittinge zwischen andernfalls separaten Gehäusen für EPB und TCM.

Gemäß einem Ausführungsbeispiel wird eine gemeinsame Steuerdruckgenerierung für EPB und TCM unter Verwendung von zwei 2/2 Magnetventilen 261, 263, einem 3/2 Magnetventil und einem Proportionalventil realisiert.

Gemäß einem Ausführungsbeispiel erfolgt eine Rückkopplung der EPB (Federspeicher zu Steuerleitung PBRV). Die Rückkopplung ist geschaltet und nur vorhanden, wenn keine Druckregelung stattfindet. Die Rückkopplung ist als Drossel im EPB-Kolben ausgeführt.

Die beschriebenen Ausführungsbeispiele sind nur beispielhaft gewählt und können miteinander kombiniert werden.

### Bezugszeichenliste

- 100: Nutzfahrzeug
- 102: Anhänger
- 110: Fußbremsventil
- 112: Druckluftversorgung
- 114: Kupplungskopf
- 116: Kupplungskopf
- 118: Parkbremse
- 120: Vorrichtung zum Steuern
- 122: Versorgungsanschluss
- 124: Betriebsbremsanschluss
- 126: Vorratsanschluss
- 128: Parkbremsanschluss
- 130: Steueranschluss
- 132: Parkbremssteuerventil
- 134: Anhängersteuerventil
- 136: schaltbare Ventileinrichtung
- 138: Steuereinrichtung
- 140: Bremse

- 220: Gehäuse
- 241: erster Parkbremssteuerventilanschluss
- 242: zweiter Parkbremssteuerventilanschluss
- 243: dritter Parkbremssteuerventilanschluss
- 251: erster Anhängersteuerventilanschluss
- 252: zweiter Anhängersteuerventilanschluss
- 253: dritter Anhängersteuerventilanschluss
- 254: vierter Anhängersteuerventilanschluss
- 255: fünfter Anhängersteuerventilanschluss
- 261: 2/2-Wegeventil
- 262: 2/2-Wegeventil
- 263: 2/2-Wegeventil
- 264: 3/2-Wegeventil
- 265: Rückschlagventil
- 267: Druckmesseinrichtung
- 270: Kolben
- 272: weiterer Kolben
- 280: Parkbremskolben
- 282: verschiebbarer Ventilsitz
- 284: weiterer Kolben

- 466: Rückkopplungsventil

## Patentansprüche

1. Vorrichtung (120) zum Steuern einer Bremsanlage für ein Nutzfahrzeug (100), mit folgenden Merkmalen:
einem Versorgungsanschluss (122) zum Bereitstellen von Druckluft, einem Betriebsbremsanschluss (124) zum Koppeln der Vorrichtung (120) mit einem Kupplungskopf (114) für eine Anhänger-Bremsleitung eines Anhängers (102) des Nutzfahrzeugs (100), einem Vorratsanschluss (126) zum Koppeln der Vorrichtung (120) mit einem Kupplungskopf (116) für eine Anhängerversorgung des Anhängers (102) und einem Parkbremsanschluss (128) zum Koppeln der Vorrichtung (120) mit einer Parkbremse (118) des Nutzfahrzeugs (100);
einem Parkbremssteuerventil (132) zum Bereitstellen einer Parkbremsfunktion für das Nutzfahrzeug (100), wobei das Parkbremssteuerventil (132) einen ersten Parkbremssteuerventilanschluss (241), einen zweiten Parkbremssteuerventilanschluss (242) und einen dritten Parkbremssteuerventilanschluss (243) aufweist, wobei der erste Parkbremssteuerventilanschluss (241) mit dem Versorgungsanschluss (122) und der zweite Parkbremssteuerventilanschluss (242) mit dem Parkbremsanschluss (128) verbunden sind;
einem Anhängersteuerventil (134) zum Bereitstellen einer Feststellbremsfunktion und einer Funktion des elektrischen Bremsens für den Anhänger (102), wobei das Anhängersteuerventil (134) einen ersten Anhängersteuerventilanschluss (251), einen zweiten Anhängersteuerventilanschluss (252), einen dritten Anhängersteuerventilanschluss (253) und einen vierten Anhängersteuerventilanschluss (254) aufweist, wobei der erste Anhängersteuerventilanschluss (251) mit dem Versorgungsanschluss (122), der zweite Anhängersteuerventilanschluss (252) mit dem Betriebsbremsanschluss (124) und der dritte Anhängersteuerventilanschluss (253) mit dem Vorratsanschluss (126) verbunden ist, und wobei das Anhängersteuerventil (134) einen Parkbremskolben (280) aufweist, der verschiebbar angeordnet ist, um abhängig von einem Belüftungszustand des vierten Anhängersteuerventilanschluss (254) eine Belüftung des zweiten Anhängersteuerventilanschlusses (252) über den ersten Anhängersteuerventilanschluss (251) zum Bereitstellen der Feststellbremsfunktion und der Funktion des elektrischen Bremsens zu steuern; und
einer schaltbaren Ventileinrichtung (136) zum schaltbaren Verbinden des Versorgungsanschlusses (122) mit dem dritten Parkbremssteuerventilanschluss (243) und/oder dem vierten Anhängersteuerventilanschluss (254), um das Bereitstellen der Parkbremsfunktion für das Nutzfahrzeug (100) sowie das Bereitstellen der Feststellbremsfunktion und der Funktion des elektrischen Bremsens für den Anhänger (102) zu bewirken.

2. Vorrichtung (120) gemäß Anspruch 1, bei dem die schaltbare Ventileinrichtung (136) zum schaltbaren Verbinden des Versorgungsanschlusses (122) mit dem dritten Parkbremssteuerventilanschluss (243) und dem vierten Anhängersteuerventilanschluss (254) ausgebildet ist.

3. Vorrichtung (120) gemäß einem der vorangegangenen Ansprüche, bei der das Parkbremssteuerventil (132) ausgebildet ist, um den zweiten Parkbremssteuerventilanschluss (242) mit dem ersten Parkbremssteuerventilanschluss (241) zu verbinden, wenn der dritte Parkbremssteuerventilanschluss (243) belüftet ist, und ausgebildet ist, um den zweiten Parkbremssteuerventilanschluss (242) von dem ersten Parkbremssteuerventilanschluss (241) zu trennen, wenn der dritte Parkbremssteuerventilanschluss (243) entlüftet ist.

4. Vorrichtung (120) gemäß einem der vorangegangenen Ansprüche, wobei der Parkbremskolben (280) des Anhängersteuerventils (134) verschiebbar angeordnet ist, um ansprechend auf eine Entlüftung des vierten Anhängersteuerventilanschlusses (254) in eine erste Endstellung bewegt zu werden, wodurch der Parkbremskolben (280) von einem Ventilsitz (282) abgehoben wird, sodass der erste Anhängersteuerventilanschluss (251) mit dem zweiten Anhängersteuerventilanschluss (252) verbunden ist, und ansprechend auf eine Belüftung des vierten Anhängersteuerventilanschlusses (254) in eine zweite Endstellung bewegt zu werden, wodurch der Parkbremskolben (280) an dem Ventilsitz (282) anliegt, sodass der erste Anhängersteuerventilanschluss (251) von dem zweiten Anhängersteuerventilanschluss (252) getrennt ist.

5. Vorrichtung (120) gemäß Anspruch 4, mit einem Steueranschluss (130) zum Koppeln der Vorrichtung (120) mit einem Fußbremsventil (110), wobei das Anhängersteuerventil (134) einen fünften Anhängersteuerventilanschluss (255) aufweist, der mit dem Steueranschluss (130) gekoppelt ist und einen Kolben (284) aufweist, der verschiebbar angeordnet ist, um ansprechend auf eine Belüftung des fünften Anhängersteuerventilanschlusses (255) gegen eine Federkraft in Richtung des Ventilsitzes (282) bewegt zu werden und gegen den Ventilsitz (282) zu drücken, wodurch der Ventilsitz (282) verschoben wird, sodass der erste Anhängersteuerventilanschluss (251) mit dem zweiten Anhängersteuerventilanschluss (252) verbunden ist.

6. Vorrichtung (120) gemäß Anspruch 5, bei der das Anhängersteuerventil (134) neben dem vierten Anhängersteuerventilanschluss (254) und dem fünften Anhängersteuerventilanschluss (255) keinen weiteren Steueranschluss aufweist.

7. Vorrichtung (120) gemäß einem der vorangegangenen Ansprüche, mit einem eine Gehäusewand aufweisenden Gehäuse (220), wobei die Gehäusewand das Parkbremssteuerventil (132), das Anhängersteuerventil (134) und die Ventileinrichtung (136) umschließt und den Betriebsbremsanschluss (124), den Vorratsanschluss (126) und den Parkbremsanschluss (128) aufweist.

8. Vorrichtung (120) gemäß einem der vorangegangenen Ansprüche, bei der die Ventileinrichtung (136) ein erstes 2/2-Wegeventil (261) aufweist, wobei ein erster Anschluss des ersten 2/2-Wegeventils (261) mit dem Versorgungsanschluss (122) und ein zweiter Anschluss des ersten 2/2-Wegeventils (261) mit dem vierten Anhängersteuerventilanschluss (254) verbunden ist, ein zweites 2/2-Wegeventil (262) aufweist, wobei ein erster Anschluss des zweiten 2/2-Wegeventils (262) mit dem vierten Anhängersteuerventilanschluss (254) und ein zweiter Anschluss des zweiten 2/2-Wegeventils (262) mit einer Entlüftung verbunden ist, und ein drittes 2/2-Wegeventil (263) aufweist, wobei ein erster Anschluss des dritten 2/2-Wegeventils (263) mit dem vierten Anhängersteuerventilanschluss (254) und ein zweiter Anschluss des dritten 2/2-Wegeventils (263) mit dem dritten Parkbremssteuerventilanschluss (243) verbunden ist.

9. Vorrichtung (120) gemäß Anspruch 8, bei der die Wegeventile (261, 262, 263) ansteuerbar sind, um das Bereitstellen der Parkbremsfunktion durch das Parkbremssteuerventil (132) sowie das Bereitstellen der Feststellbremsfunktion und der Funktion des elektrischen Bremsens durch das Anhängersteuerventil (134) zu bewirken.

10. Vorrichtung (120) gemäß Anspruch 9, bei der die Ventileinrichtung (136) ein viertes 2/2-Wegeventil (466) aufweist, wobei ein erster Anschluss des vierten 2/2-Wegeventils (466) mit dem zweiten Parkbremssteuerventilanschluss (242) und ein zweiter Anschluss des vierten 2/2-Wegeventils (466) mit dem dritten Parkbremssteuerventilanschluss (243) verbunden (243) ist.

11. Bremsanlage für ein Nutzfahrzeug (100), mit folgenden Merkmalen:
einer Vorrichtung (120) gemäß einem der vorangegangenen Ansprüche;
einer Druckluftversorgung (112), die über den Versorgungsanschluss (122) mit der Vorrichtung (120) verbunden ist, einem Kupplungskopf (114) für eine Anhänger-Bremsleitung, der über den Betriebsbremsanschluss (124) mit der Vorrichtung (120) verbunden ist, einem Kupplungskopf (116) für eine Anhängerversorgung, der über den Vorratsanschluss (126) mit der Vorrichtung (120) verbunden ist und einer Parkbremse (118), die über den Parkbremsanschluss (128) mit der Vorrichtung (120) verbunden ist; und
einer elektronischen Steuereinrichtung (138), die ausgebildet ist, um zumindest ein Steuersignal an zumindest einen Steuereingang der Ventileinrichtung (136) bereitzustellen.

## Claims

1. Device (120) for controlling a brake system for a utility vehicle (100), having the following features:
a supply port (122) for the provision of compressed air, a service brake port (124) for the coupling of the device (120) to a coupling head (114) for a trailer brake line of a trailer (102) of the utility vehicle (100), the reservoir port (126) for the coupling of the device (120) to a coupling head (116) for a trailer supply of the trailer (102), and a parking brake port (128) for the coupling of the device (120) a parking brake (118) of the utility vehicle (100);
a parking brake control valve (132) for the provision of a parking brake function for the utility vehicle (100), wherein the parking brake control valve (132) has a first parking brake control valve port (241), a second parking brake control valve port (242) and a third parking brake control valve port (243), wherein the first parking brake control valve port (241) is connected to the supply port (122) and the second parking brake control valve port (242) is connected to the parking brake port (128);
a trailer control valve (134) for the provision of an immobilizing brake function and a function of electric braking for the trailer (102), wherein the trailer control valve (134) has a first trailer control valve port (251), a second trailer control valve port (252), a third trailer control valve port (253) and a fourth trailer control valve port (254), wherein the first trailer control valve port (251) is connected to the supply port (122), the second trailer control valve port (252) is connected to the service brake port (124) and the third trailer control valve port (253) is connected to the reservoir port (126) and wherein the trailer control valve (134) has a parking brake piston (280) which is arranged in displaceable fashion in order, in a manner dependent on a state of aeration of the fourth trailer control valve port (254), to control an aeration of the second trailer control valve port (252) via the first trailer control valve port (251) for the provision of the immobilizing brake function and the function of electric braking; and
a switchable valve means (136) for the switchable connection of the supply port (122) to the third parking brake control valve port (243) and/or to the fourth trailer control valve port (254) in order to effect the provision of the parking brake function for the utility vehicle (100) and the provision of the immobilizing brake function and the function of electric braking for the trailer (102).

2. Device according to Claim 1, in which the switchable valve means (136) is designed for the switchable connection of the supply port (122) to the third parking brake control valve port (243) and to the fourth trailer control valve port (254).

3. Device (120) according to either of the preceding claims, in which the parking brake control valve (132) is designed to connect the parking brake control valve port (242) to the first parking brake control valve port (241) when the third parking brake control valve port (243) is aerated, and is designed to separate the second parking brake control valve port (242) from the first parking brake control valve port (241) when the third parking brake control valve port (243) is deaerated.

4. Device (120) according to one of the preceding claims, wherein the parking brake piston (280) of the trailer control valve (134) is arranged in displaceable fashion in order to be moved into a first end position in response to a deaeration of the fourth trailer control valve port (254), whereby the parking brake piston (280) is lifted off from a valve seat (282) such that the first trailer control valve port (251) is connected to the second trailer control valve port (252), and to be moved into a second end position in response to an aeration of the fourth trailer control valve port (254), whereby the parking brake piston (280) comes to bear against the valve seat (282) such that the first trailer control valve port (251) is separated from the second trailer control valve port (252) .

5. Device (120) according to Claim 3, having a control port (130) for the coupling of the device (120) to a footbrake valve (110), wherein the trailer control valve (134) has a fifth trailer control valve port (255), which is coupled to the control port (130), and has a piston (284), which is arranged in displaceable fashion in order to be moved in the direction of a valve seat (282), and pressed against the valve seat (282), counter to a spring force in response to an aeration of the fifth trailer control valve port (255), whereby the valve seat (282) is displaced such that the first trailer control valve port (251) is connected to the second trailer control valve port (252).

6. Device (120) according to Claim 5, in which the trailer control valve (134) has no further control port in addition to the fourth trailer control valve port (254) and the fifth trailer control valve port (255).

7. Device (120) according to one of the preceding claims, having a housing (220) which has a housing wall, wherein the housing wall encloses the parking brake control valve (132), the trailer control valve (134) and the valve means (136) and has the service brake port (124), the reservoir port (126) and the parking brake port (128).

8. Device (120) according to one of the preceding claims, in which the valve means (136) has a first 2/2 directional valve (261), wherein a first port of the first 2/2 directional valve (261) is connected to the supply port (122) and a second port of the first 2/2 directional valve (261) is connected to the fourth trailer control valve port (254), has a second 2/2 directional valve (262), wherein a first port of the second 2/2 directional valve (262) is connected to the fourth trailer control valve port (254) and a second port of the second 2/2 directional valve (262) is connected to a deaeration vent, and has a third 2/2 directional valve (263), wherein a first port of the third 2/2 directional valve (263) is connected to the fourth trailer control valve port (254) and a second port of the third 2/2 directional valve (263) is connected to the third parking brake control valve port (243) .

9. Device (120) according to Claim 8, in which the directional valves (261, 262, 263) are actuable in order to effect the provision of the parking brake function by means of the parking brake control valve (132) and the provision of the immobilizing brake function and the function of electric braking by means of the trailer control valve (134).

10. Device (120) according to Claim 9, in which the valve means (136) has a fourth 2/2 directional valve (466), wherein a first port of the fourth 2/2 directional valve (466) is connected to the second parking brake control valve port (242) and a second port of the fourth 2/2 directional valve (466) is connected to the third parking brake control valve port (243).

11. Brake system for a utility vehicle (100), having the following features:
a device (120) according to one of the preceding claims;
a compressed-air supply (112) which is connected via the supply port (122) to the device (120), a coupling head (114), which is connected via the service brake port (124) to the device (120), for a trailer brake line, a coupling head (116), which is connected via the reservoir port (126) to the device (120), for a trailer supply, and a parking brake (118), which is connected via the parking brake port (128) to the device (120); and
an electronic control means (138) which is designed to provide at least one control signal to at least one control input of the valve means (136).

## Revendications

1. Système (120) de commande d'un système de frein d'un véhicule (100) utilitaire, ayant les caractéristiques suivantes :
un raccord (122) d'alimentation pour procurer de l'air comprimé, un raccord (124) de frein de service pour accoupler le système (120) à une tête (114) d'accouplement d'un conduit de frein d'une remorque (102) du véhicule (100) utilitaire, un raccord (126) de réservoir pour accoupler le système (120) à une tête (116) d'accouplement d'une alimentation de la remorque (102) et un raccord (128) de frein de stationnement pour accoupler le système (120) à un frein (118) de stationnement du véhicule (100) utilitaire ;
une soupape (132) de commande du frein de stationnement pour procurer une fonction de frein de stationnement du véhicule (100) utilitaire ;
une soupape (132) de commande de frein de stationnement pour procurer une fonction de frein de stationnement au véhicule (100) utilitaire, la soupape (132) de commande de frein de stationnement ayant un premier raccord (241) de soupape de commande de frein de stationnement, un deuxième raccord (242) de soupape de commande de frein de stationnement et un troisième raccord (243) de soupape de commande de frein de stationnement, le premier raccord (241) de soupape de commande de frein de stationnement communiquant avec le raccord (122) d'alimentation et le deuxième raccord (242) de soupape de commande de frein de stationnement communiquant avec le raccord (128) de frein de stationnement ;
une soupape (134) de commande de remorque, pour procurer une fonction de frein d'arrêt et une fonction du freinage électrique de la remorque (102), la soupape (134) de commande de remorque ayant un premier raccord (251) de soupape de commande de remorque, un deuxième raccord (252) de soupape de commande de remorque un troisième raccord (253) de soupape de commande de remorque et un quatrième raccord (254) de soupape de commande de remorque, le premier raccord (251) de soupape de commande de remorque communiquant avec le raccord (122) d'alimentation, le deuxième raccord (252) de soupape de commande de remorque communiquant avec le raccord (124) de frein de service et le troisième raccord (253) de soupape de commande de remorque communiquant avec le raccord (126) de réservoir et la soupape (134) de commande de remorque ayant un piston (280) de frein de stationnement, qui est monté coulissant pour, en fonction d'un état d'alimentation en air du quatrième raccord (254) de soupape de commande de remorque, commander une alimentation en air du deuxième raccord (252) de soupape de commande de remorque par l'intermédiaire du premier raccord (251) de soupape de commande de remorque, pour procurer la fonction de frein d'arrêt et commander la fonction du freinage électrique et
un dispositif (136) de soupape commutable, pour faire communiquer de manière commutable le raccord (132) d'alimentation avec le troisième raccord (243) de soupape de commande de frein de stationnement et/ou avec le quatrième raccord (254) de soupape de commande de remorque, afin de provoquer la mise à disposition de la fonction de frein de stationnement du véhicule (100) utilitaire, ainsi que la mise à disposition de la fonction de frein d'arrêt et de la fonction de freinage électrique de la remorque (102) .

2. Système (120) suivant la revendication 1, dans lequel le dispositif (136) de soupape commutable est constitué pour la communication commutable du raccord (122) d'alimentation avec le troisième raccord (243) de soupape de commande de frein de stationnement et le quatrième raccord (254) de soupape de commande de remorque.

3. Système (120) suivant l'une des revendications précédentes, dans lequel la soupape (132) de commande de frein de stationnement est constituée pour mettre le deuxième raccord (242) de soupape de commande de frein de stationnement en communication avec le premier raccord (241) de soupape de commande de frein de stationnement, si le troisième raccord (243) de soupape de commande de frein de stationnement est alimenté en air, et est constitué pour séparer le deuxième raccord (242) de soupape de commande de frein de stationnement du premier raccord (241) de soupape de commande de frein de stationnement, si le troisième raccord (243) de soupape de commande de frein de stationnement est purgé.

4. Système (120) suivant l'une des revendications précédentes, dans lequel le piston (280) de frein de stationnement de la soupape (134) de commande de remorque est monté coulissant, afin d'être, conformément à une purge du quatrième raccord (254) de soupape de commande de remorque, mis dans une première position d'extrémité, grâce à quoi le piston (280) de frein de stationnement est soulevé d'un siège (282) de soupape, de sorte que le premier raccord (251) de commande de remorque communique avec le deuxième raccord (252) de soupape de commande de remorque, et d'être, conformément à une alimentation en air du quatrième raccord (254) de soupape de commande de remorque, mis dans une deuxième position d'extrémité, grâce à quoi le piston (280) de frein de stationnement s'applique au siège (282) de la soupape, de sorte que le premier raccord (251) de soupape de commande de remorque est séparé du deuxième raccord (252) de soupape de commande de remorque.

5. Système (120) suivant la revendication 4, comprenant un raccord (130) de commande, pour accoupler le système (120) à une soupape (110) de frein à pied, la soupape (34) de commande de remorque ayant un cinquième raccord (255) de soupape de commande de remorque, qui est accouplé au raccord (130) de commande, et un piston (284), qui est monté coulissant pour être, conformément à une alimentation en air du cinquième raccord (255) de soupape de commande de remorque, déplacé à l'encontre d'une force de ressort en direction du siège (282) de la soupape et poussé sur le siège (282) de la soupape, grâce à quoi le siège (282) de la soupape est déplacé, de sorte que le premier raccord (251) de soupape de commande de remorque communique avec le deuxième raccord (252) de soupape de commande de remorque.

6. Système (120) suivant la revendication 5, dans lequel la soupape (134) de commande de remorque n'a, outre le quatrième raccord (254) de soupape de commande de remorque et le cinquième raccord (255) de soupape de commande de remorque, pas d'autres raccords de commande.

7. Système (120) suivant l'une des revendications précédentes, comprenant un boîtier (220) ayant une paroi, la paroi du boîtier entourant la soupape (132) de commande de frein de stationnement, la soupape (134) de commande de remorque et le dispositif (136) de soupape, et ayant le raccord (124) de frein de service, le raccord (126) de réservoir et le raccord (128) de frein de stationnement.

8. Système (120) suivant l'une des revendications précédentes, dans lequel le dispositif (136) de soupape a une première soupape (261) à 2/2 voies, un premier raccord de la première soupape (261) à 2/2 voies communiquant avec le raccord (122) d'alimentation et un deuxième raccord de la première soupape (261) à 2/2 voies communiquant avec le quatrième raccord de soupape de commande de remorque, une deuxième soupape (262) à 2/2 voies, un premier raccord de la deuxième soupape à 2/2 voies communiquant avec le quatrième raccord (254) de soupape de commande de remorque et un deuxième raccord de la deuxième soupape (262) à 2/2 voies communiquant avec une purge, et une troisième soupape (263) à 2/2 voies, un premier raccord de la troisième soupape (263) à 2/2 voies communiquant avec le quatrième raccord (254) de soupape de commande de remorque et un deuxième raccord de la troisième soupape (263) à 2/2 voie communiquant avec le troisième raccord (243) de soupape de commande de frein de stationnement.

9. Système (120) suivant la revendication 8, dans lequel les soupapes (261, 262, 263) à plusieurs voies peuvent être commandées, afin de provoquer la mise à disposition de la fonction de frein de stationnement par la soupape (132) de commande de frein de stationnement, ainsi que la mise à disposition de la fonction de frein d'arrêt et de la fonction du freinage électrique par la soupape (134) de commande de remorque.

10. Système (120) suivant la revendication 9, dans lequel le dispositif (136) de soupape a une quatrième soupape (466) à 2/2 voies, un premier raccord de la quatrième soupape (466) à 2/2 voies communiquant avec le deuxième raccord (242) de soupape de commande de frein de stationnement et un deuxième raccord de la quatrième soupape (466) à 2/2 voies communiquant avec le troisième raccord (243) de la soupape de commande de frein de stationnement.

11. Installation de freinage d'un véhicule (100) utilitaire ayant les caractéristiques suivantes :
un système (120) suivant l'une des revendications précédentes ;
une alimentation (112) en air comprimé, qui communique avec le système (120) par le raccord (122) d'alimentation, une tête (114) d'accouplement d'un conduit de frein de remorque, qui communique avec le système (120) par le raccord (124) de frein, une tête (116) d'accouplement d'une alimentation de remorque, qui communique avec le système (120) par le raccord (126) de réservoir et un frein (118) de stationnement, qui communique avec le système (120) par le raccord (128) de frein de stationnement et
un dispositif (138) électronique de commande, constitué pour procurer au moins un signal de commande à au moins une entrée de commande du dispositif (136) de soupape.
